# FASCICULE DE BREVET EUROPEEN

(11) **EP 2 024 909 B1**
(45) Date de publication et mention de la délivrance du brevet: **04.08.2010**
(21) Numéro de dépôt: 07729846.1
(22) Date de dépôt: 04.06.2007
(51) Int. Cl.: G06K 19/073, G06F 21/00

(54) **CARTE ELECTRONIQUE DOTEE DE FONCTIONS SECURITAIRES ET PROCEDE DE SECURISATION DE LA CARTE ELECTRONIQUE**
MIT SICHERHEITSFUNKTIONEN AUSGESTATTETES ELEKTRONISCHES BOARD UND VERFAHREN ZUR SICHERSTELLUNG DER SICHERHEIT ELEKTRONISCHER BOARDS
ELECTRONIC BOARD PROVIDED WITH SECURITY FUNCTIONS AND METHOD FOR ENSURING ELECTRONIC BOARD SECURITY

(30) Priorité: 08.06.2006 FR 0652064
(43) Date de publication de la demande: 18.02.2009
(73) Titulaire: Thomson Licensing, 92130 Issy-les-Moulineaux (FR)
(72) Inventeur: GUILLOT, Philippe, 35170 Bruz (FR); VIGNERON, Patrick, 35000 Rennes (FR); LAUNAY, Philippe, 35200 Rennes (FR)
(74) Mandataire: Benezeth, Philippe J.L. M.
(86) Numéro de dépôt international: PCT/EP2007/055458
(87) Numéro de publication internationale: WO 2007/141233

(56) Documents cités:
- EP-A- 1 387 238
- EP-A- 1 580 922
- FR-A1- 2 857 534
- US-A1- 2005 257 182
- US-B1- 6 418 552

## Description

La présente invention concerne une carte électronique dotée de fonctions sécuritaires et un procédé de sécurisation de la carte électronique..

Les appareils électriques contiennent un ou plusieurs circuits imprimés sur lesquels sont fixés des composants électroniques. De façon à augmenter la densité des circuits et à permettre l'implémentation de circuits dotés de nombreuses broches, les circuits imprimés sont dotés de plusieurs couches de bandes de cuivre assurant ainsi les connexions électriques, la largeur des bandes de cuivre étant typiquement de 0.3 millimètres. Pour réaliser des connexions électriques entre plusieurs niveaux, la technique la plus courante est celle des trous traversants. Le circuit imprimé est troué et une métallisation est effectuée dans le trou afin de relier électriquement toutes les bandes de cuivre traversées par le trou.

Certains appareils sont dotés de fonctions de sécurité. Parmi ces appareils on trouve : des appareils bancaires, des boîtiers de contrôles d'accès à des locaux ou des ordinateurs, des organes de commandes d'équipements dangereux (machines radiologiques, contrôles d'armement, verrouillage d'engins militaires, etc.), des appareils comportant des modules de sécurité permettant de générer des clefs ou des signature à l'aide de calcul cryptographique, des décodeurs de télévision, etc. Ces appareils permettent généralement l'accès à des données lorsque des codes de sécurité sont présentés correctement. La vérification de ces codes de sécurité s'effectue à l'aide de clefs enregistrées dans une mémoire d'un composant. Une grande partie de la sécurité du système vient du fait que ces clefs ne peuvent être lus à l'extérieur d'une enceinte sécurisée. Pour protéger l'accès au mémoire contenant des données sensibles, une première méthode consiste à noyer l'ensemble des composants et du circuit imprimé dans une résine ou de la colle polymérisée. Des connecteurs fixés au bloc de résine permettent la communication, notamment l'introduction de codes d'accès. Si un malfaiteur veut accéder au composant mémoire, il doit dissoudre la résine sans détériorer le circuit imprimé et les composants électroniques. Bien que difficile, ce travail est faisable en utilisant de gros moyens. Ensuite, le malfaiteur met en marche le circuit et peut espionner les signaux échangés entre les différents composants à l'aide de pointes de lecture en métal avec une extrémité très fine. La résine ou la colle polymérisée complique le processus de fabrication et augmente le prix du circuit imprimé. Un autre moyen pour éviter l'insertion des pointes de lecture, consiste à rapprocher les composants à sécuriser de façon à ne pas les éloigner de plus de 3 millimètres. On considère que, en dessous de cette distance, il n'est pas possible de glisser une pointe de lecture.

Généralement une partie seulement des composants sont directement concernés par la sécurité, parmi ceux-ci on trouve typiquement l'unité centrale, la mémoire non volatile, le cryptoprocesseur. Les données à sécuriser sont généralement échangées par un bus de communication. Un nombre important de circuits reçoivent et/ou transmettent des données sur ce bus et n'ont pas nécessairement de fonctions sécuritaires. Cependant, ces circuits reçoivent par le bus les mêmes données à sécuriser, ils doivent donc être également éloignés les uns des autres d'au plus 3 millimètres. L'expérience prouve qu'au-delà de cinq composants, il est quasi impossible de les positionner en respectant cette règle de 3 millimètres.

Le document FR 2 857 534 déposé par INNOVA CARD décrit un circuit intégré comportant un module ordinaire et un module sécurisé relié l'un à l'autre par une liaison protégé. Les requêtes transmises au module sécurisé circulent en clair sur le bus ordinaire et sont chiffrées sur le bus sécurisé. Les modules comportent des éléments maître et esclave. La requête provenant d'un élément maître est chiffrée par son module de brouillage avant d'être transmise à un élément esclave. Elle est ensuite déchiffrée par un module de protection qui l'achemine vers l'élément esclave. Ce document ne décrit pas de solutions permettant de limiter le sondage (en Anglais : « probing ») des signaux par des conducteurs électriques appliqués sur le circuit imprimé.

Le document US 6 418 552 déposé par HEWLETT PACKARD décrit une méthode pour définir la dimension de piste sur un circuit imprimé ainsi que la position des circuits intégrés afin d'obtenir les meilleures performances en termes de vitesse. La méthode prend en compte les signaux de synchronisation des différents circuits électroniques, et le chemin le plus long entre deux circuit pour transmettre un signal.

Notre invention permet entre autre de limiter les contraintes d'implémentation des circuits intégrés tout en assurant un haut niveau de sécurité à certaines zones du circuit imprimé.

L'invention concerne une carte électronique comportant une zone dite sécurisée comprenant une pluralité de premiers circuits électronique dont un circuit de contrôle, lesdits premiers circuits étant éloignés les uns des autres d'au plus une distance déterminée, les liaisons électriques reliées aux premiers circuits et transmettant des signaux sécurisés ne s'éloignant pas desdits premiers circuits d'au plus ladite distance déterminée, et une zone non sécurisée comprenant des seconds circuits électroniques qui sont éloignés des premiers circuits de plus de la distance déterminée ou dont les liaisons électriques transmettant des signaux sécurisés sont distants de plus de ladite distance déterminée ; caractérisé en ce que la zone sécurisée comprend un circuit de communication permettant le passage de signaux entre les premiers et seconds circuits, le passage des signaux électriques dans le circuit de communication étant conditionné par un signal électrique de commande émis par le circuit de contrôle.

De cette façon, les signaux soumis à des contraintes de sécurité ne sortent de la zone sécurisée que si le circuit de contrôle l'autorise.

Selon un perfectionnement, plusieurs circuits de communication reçoivent le même signal électrique de commande émis par le circuit de contrôle. De cette façon, on peut utiliser des circuits relativement courants et les disposer sur la carte électronique pour en avoir le nombre nécessaire à la sécurisation de tous les signaux. Selon un perfectionnement, une partie des signaux échangés entre les premiers et seconds circuits traversent le circuit de communication, les signaux ne traversant pas le circuit étant considérés comme non sécurisés. De cette façon, le nombre et la taille du circuit de communication sont optimisés.

Selon un perfectionnement, le signal électrique de commande conditionnant le passage des signaux électriques dans le circuit de communication est fonction du code opératoire de l'instruction en cours d'exécution dans le circuit de contrôle. De cette manière, la sécurisation des données est assurée instruction par instruction. Selon une variante, le signal électrique de commande est fonction de l'adresse du code opératoire de l'instruction en cours d'exécution dans le circuit de contrôle. De cette façon, on peut compartimenter des banques de codes de programme et leur affecter un critère de sécurité. Selon une variante, le signal électrique de commande est émis par un port de sortie du circuit de contrôle. On peut ainsi utiliser un circuit très courant et utiliser un port afin de fixer par un niveau électrique l'état sécuritaire ou non des instructions qui vont ensuite être exécutées.

Selon un perfectionnement, le signal électrique de commande est relié à un port d'entrée du circuit de contrôle de façon à pouvoir lire son état électrique présent sur la carte électronique. Le circuit de contrôle se bloque si l'état détecté physiquement au niveau du port d'entrée ne correspond pas à l'état logique imposé par le circuit de contrôle. De cette façon, si une tentative de forcer à un état inactif le signal électrique de commande est faite, on peut le détecter et le cas échéant bloquer le fonctionnement du circuit de contrôle. Selon un perfectionnement, le circuit de communication contient une mémoire permettant au circuit de contrôle de sauvegarder des données. De cette manière, le circuit de communication et la mémoire ne constituent plus qu'un seul circuit, il y a donc un circuit de moins à intégrer dans la zone sécurisée.

La présente invention concerne également une méthode de contrôle d'accès à des données au sein d'une carte électronique comportant une zone dite sécurisée comprenant une pluralité de premiers circuits électronique dont un circuit de contrôle, lesdits premiers circuits étant éloignés les uns des autres d'au plus une distance déterminée, les liaisons électriques reliées aux premiers circuits et transmettant des signaux sécurisés ne s'éloignant pas desdits premiers circuits d'au plus ladite distance déterminée, et une zone non sécurisée comprenant des seconds circuits électroniques qui sont éloignés des premiers circuits de plus de la distance déterminée ou dont les liaisons électriques transmettant des signaux sécurisés sont distants de plus de ladite distance déterminée ;
caractérisé en ce que la zone sécurisée comprend un circuit de communication permettant le passage de signaux entre les premiers et seconds circuits, le passage des signaux électriques dans le circuit de communication étant conditionné par un signal électrique de commande émis par le circuit de contrôle, le procédé comportant une étape de lecture du signal électrique de commande par le circuit de contrôle de façon à pouvoir lire son état électrique, et une étape de blocage dudit circuit de contrôle si l'état électrique détecté ne correspond pas à l'état imposé par le circuit de contrôle.

D'autres caractéristiques et avantages de l'invention apparaîtront à travers la description d'un exemple de réalisation non limitatif de l'invention, explicité à l'aide des figures jointes, parmi lesquelles :
- la figure 1 est un diagramme bloc d'un récepteur de programmes de télévision contenant un exemple de réalisation de carte électronique ;
- la figure 2 représente un diagramme bloc d'une carte électronique montrant la zone sécurisée selon un exemple de réalisation ;
- la figure 3 représente un exemple de schéma des principaux circuits de la zone sécurisée selon un exemple d'implémentation de l'invention ;
- la figure 4 représente un dessin d'implémentation des principaux circuits de la zone sécurisée selon un exemple d'implémentation ;
- la figure 5 représente un diagramme bloc d'une carte électronique montrant la zone sécurisée selon un perfectionnement ;
- la figure 6 représente un schéma des principaux circuits de la zone sécurisée selon le perfectionnement illustré par la figure 5 ;
- la figure 7 représente un dessin d'implémentation des principaux circuits de la zone sécurisée selon un exemple d'implémentation ;

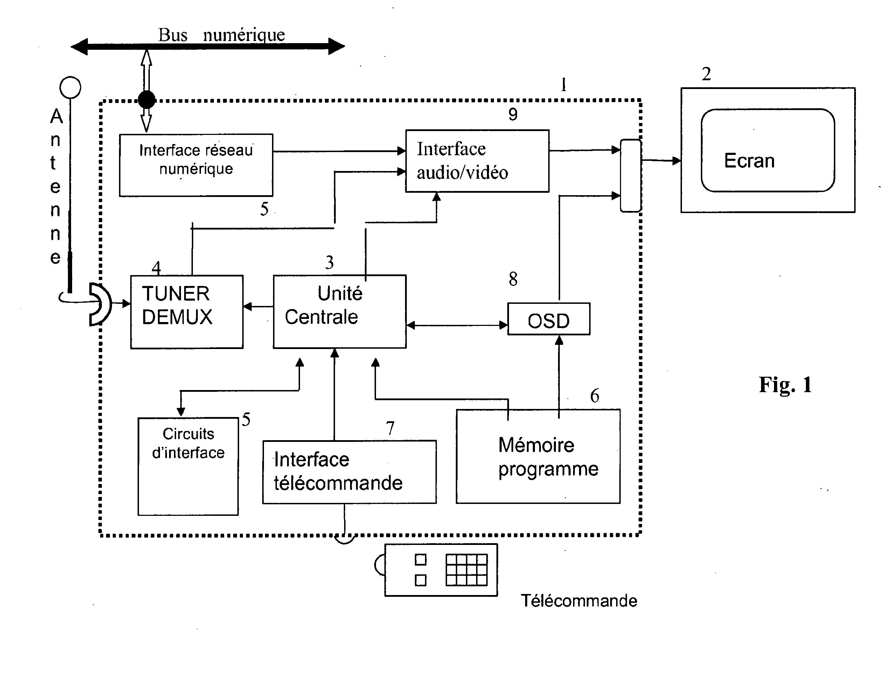

Selon un exemple préféré de réalisation, la carte électronique est implémentée dans un récepteur tel que représenté à la figure 1, typiquement un décodeur associé à un dispositif d'affichage 2. Le récepteur comprend une unité centrale 3 reliée à une mémoire de programme 6, un récepteur de signaux infrarouge 7 pour recevoir les signaux d'une télécommande, des circuits d'interface 5 pour par exemple l'affiche de donnée en face avant et une logique de décodage audio/vidéo 9 pour la génération des signaux audiovisuels envoyés à l'écran de télévision 2. Le récepteur 1 comprend également un circuit 8 d'affichage de données sur l'écran, appelé souvent circuit OSD, de l'anglais "On Screen Display" (signifiant littéralement "affichage sur l'écran"). Le circuit OSD 8 est un générateur de texte et de graphisme qui permet d'afficher à l'écran des menus, des pictogrammes ou autres graphismes. Le récepteur dispose d'un connecteur permettant notamment de recevoir des données audio et/ou vidéo d'un réseau de diffusion à travers une antenne de réception associée à un démodulateur 4, ce réseau peut être de type radio, câble ou satellite. Les connecteurs assurent également la communication avec un bus numérique local à haut débit permettant de recevoir des informations sur les contenus audio diffusés. L'interface 5 permet également de connecter d'autres appareils, par exemple des appareils dotés de connexions de type USB, CVBS (entrée vidéo composite) ou 4 :2 :2 (CCIR 656 - vidéo numérique), à travers d'autres connecteurs.

Il va de soi que tout appareil doté d'une carte électronique et ayant des fonctions de sécurité entre dans le cadre de la présente invention. La carte électronique peut par exemple être disposée dans des appareils bancaires, des boîtiers de contrôles d'accès à des locaux ou des ordinateurs, des organes de commandes d'équipements dangereux, des appareils comportant des modules de sécurité permettant de générer des clefs ou des signature à l'aide de calcul cryptographique, des décodeurs de télévision, etc.

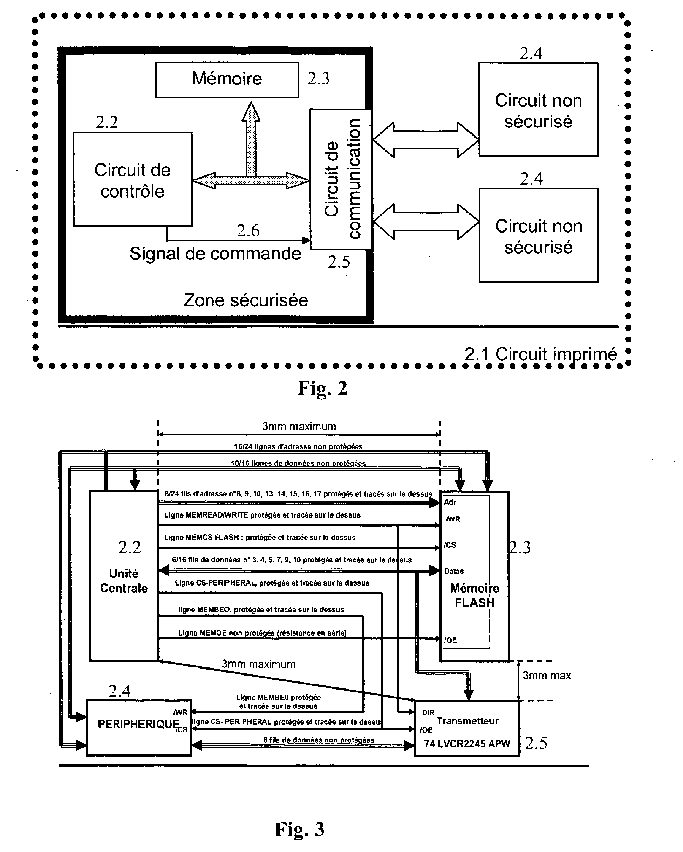

La figure 2 montre un diagramme bloc du circuit imprimé 2.1 présentant schématiquement les circuits à sécuriser et les circuits qui n'ont pas besoin de l'être. Les circuits à sécuriser sont regroupés sur une zone du circuit imprimé, définissant ainsi une zone sécurisée. Ces circuits respectent la règle des 3 millimètres, c'est-à-dire ils ne sont pas éloignés les uns des autres de plus de 3 millimètres et les pistes transportant des signaux à sécuriser entre les circuits de la zone sécurisée ne s'éloignent pas non plus de cette distance. Parmi ces circuits, on trouve typiquement une unité de contrôle 2.2 qui dans certains cas peut être l'unité centrale 3 gérant globalement le récepteur 1 et une mémoire non volatile 2.3 pour le stockage du code exécutable et des données secrètes. Les autres circuits 2.4 n'ont pas besoin d'être si proches à condition de ne pas recevoir de signaux sécurisés. Pour éviter de les recevoir, la zone sécurisée est doté d'un « circuit transmetteur pour bus logique avec sortie isolée » 2.5 ou « buffer » en Anglais. Le circuit transmetteur 2.5 réalise une fonction de portail permettant d'échanger des signaux entre une zone sécurisée de la carte et le reste des circuits électriques. Dans l'exemple de réalisation, cette porte est un amplificateur bidirectionnel (ou « Buffer » en anglais), par exemple un circuit référencé 74LVCR2245APW. Ce circuit est doté de deux entrées de contrôle : l'entrée DIR (non représentée) définit le sens des données, elle est reliée au circuit de contrôle 2.2 qui définit à tout moment le sens de transmission des données du bus. L'entrée OE (de l'Anglais « Output Enable ») active ou non la sortie du circuit transmetteur 2.5, c'est-à-dire si cette entrée n'est pas activée, les sorties sont en logique trois états et il n'est pas possible alors de lire les données placées en entrées. Si l'entrée OE est activée, alors les sorties reproduisent exactement les signaux placés sur les différentes lignes d'entrées du circuit transmetteur 2.5. L'entrée OE est reliée par un fil 2.6 à l'unité de contrôle 2.2. On notera que l'ensemble des circuits 2.2, 2.3 et 2.5 doivent obéir à la règle des 3 millimètres.

La sécurité est assurée de la façon suivante. Lorsque le circuit de contrôle 2.2 exécute une instruction pour laquelle les données ne doivent pas être captées à l'extérieur de la zone sécurisée, alors il désactive le circuit transmetteur 2.5 en transmettant la commande par le fil 2.6. Les signaux restent alors localisés dans la zone sécurisée. Si l'instruction exécutée par le circuit de contrôle 2.2 n'a pas besoin d'être sécurisée, alors le circuit transmetteur 2.5 est désactive permettant ainsi le transfert dans un sens ou dans l'autre des données vers les circuits 2.4 en dehors de la zone sécurisée. Dans un mode où la sécurité est renforcée, tous les signaux échangés entre la zone sécurisée et les autres circuits électroniques passent à travers des circuits transmetteurs 2.5. La référence 74LVCR2245APW concerne un circuit sans broche accessible à une pointe de test et permettant un transfert de données sur huit lignes. Pour un bus de 16 bits de données, 24 bits d'adresses et 5 lignes de contrôle, il faut donc six circuits transmetteurs 2.5. Selon un perfectionnement de l'invention, une partie des signaux de données échangés passent à travers un circuit transmetteur 2.5, en priorité les plus sensibles. L'expérience a montré que l'on pouvait diminuer de 2 à 3 le nombre de lignes passant à travers le circuit transmetteur 2.5 sans réduire notablement la sécurité. De cette manière, on peut limiter le nombre de circuits transmetteurs à implémenter, cet avantage est d'autant plus important que les circuits transmetteurs 2.5 doivent se trouver dans la zone sécurisée et donc respecter la règle des 3 millimètres. Dans le prototype réalisé, les signaux passant à travers le circuit transmetteur 2.5 sont les signaux :
- 6 des 16 lignes du bus de données, le choix des lignes est faite selon les facilités de typographie,
- 8 fils de poids fort du bus d'adresse, ces fils apparaissent plus sensibles car en analysant leur évolution, on peut détecter des changement de bloc de code opératoire,
- les signaux de commande OE (de l'Anglais « Output Enable ») activant les entrées sorties et RD/WR activant le sens des entrées sorties.

La figure 3 est un schéma montrant les principaux circuits de la zone sécurisée avec leurs principales liaisons. Le circuit d'interface marqué « PERIPHERAL TSOP » n'appartient pas à la zone sécurisée. On y voit qu'il est relié au circuit de contrôle marqué « CPU BGA » par des lignes passant le circuit transmetteurs 74LVCR2245APW et par des lignes directes, ces dernières n'étant pas sécurisées.

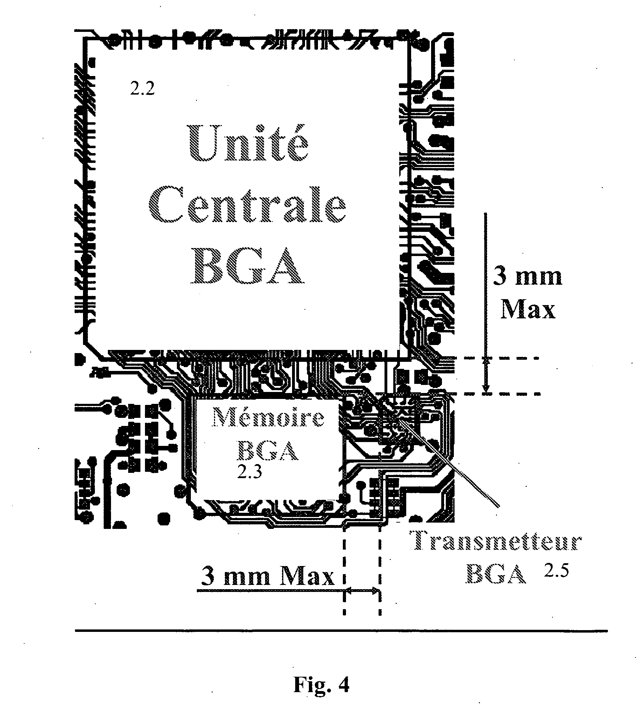

La figure 4 représente un dessin d'implémentation des principaux circuits de la zone sécurisée selon l'exemple d'implémentation du prototype réalisé. On voit notamment l'application de la règle des 3 millimètres.

Selon un mode préféré de réalisation, l'état logique du fil 2.6 de contrôle du circuit transmetteur 2.5 dépend du caractère sécuritaire ou non de l'instruction actuellement exécuté par le circuit de contrôle 2.2. Ce circuit dispose de deux jeux d'instructions identifiées par des codes opératoires, toute instruction du jeu d'instructions sécuritaires déclenche l'activation du circuit transmetteur 2.5 via le fil 2.6. L'exécution d'une instruction du jeu non sécuritaire ne déclenche pas l'activation du circuit transmetteur 2.5. Une variante consiste en ce que le circuit de contrôle 2.2 met à jour l'état logique du fil 2.6 de contrôle en fonction de l'adresse mémoire de l'instruction à exécuter. Une façon simple consiste à partager le mémoire programme en banque et à affecter à chaque banque un indicateur spécifiant le caractère sécuritaire. Lorsqu'une banque est marquée comme « à sécuriser », toute exécution d'instruction enregistrée dans cette banque active le fil de contrôle 2.6. vers le circuit transmetteur 2.5. Avantageusement, l'indicateur est dans une mémoire EEPROM intégrée dans le circuit de contrôle 2.2, son initialisation s'effectue en mode personnalisation du composant et après présentation d'un code d'accès. Une troisième variante consiste en ce que le fil 2.6 de contrôle du circuit transmetteur 2.5 soit relié à une broche de sortie d'un port I/O du circuit de contrôle 2.2. Avant d'exécuter une routine de code exécutable, le circuit de contrôle 2.2 initialise par une instruction la valeur du bit permettant d'activer le fil 2.6. A la fin de la routine, par une autre instruction, le circuit de contrôle 2.2 désactive le fil.

Selon un perfectionnement, le circuit de contrôle 2.2 possède un circuit d'entrée permettant de lire l'état électrique du fil 2.6. Ce perfectionnement est particulièrement utile dans le cas où un malfaiteur aurait réussi à imposer à ce fil un état inactif, ce qui laisserait ouvert le portail constitué du circuit transmetteur 2.5 et donc permettrait de voir des signaux sécurisés. Le programme exécutable peut ainsi vérifier si la commande de l'état logique du fil 2.6 correspond bien à son niveau électrique. Si le programme détecte un niveau électrique correspondant à une désactivation alors que sa commande l'active, il se bloque et s'interdit d'exécuter toutes fonctions sécuritaires. Le blocage peut consister à griller un fusible à l'intérieur du circuit de contrôle. Lors des mises sous tension ultérieures, l'unité de contrôle 2.2 teste l'état du fusible et interrompt son fonctionnement si le fusible est grillé. Une autre façon de faire consiste à écrire l'information correspondant à l'état d'un fusible dans une cellule EEPROM dans une mémoire interne ou externe à l'unité de contrôle 2.2.

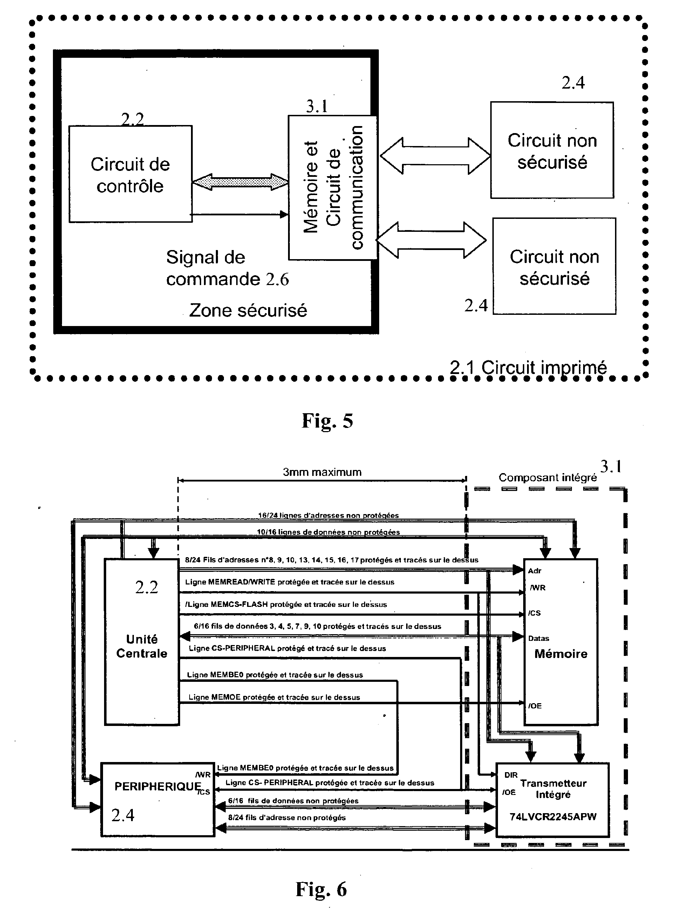

Selon un autre mode de réalisation de la présente invention, au moins une partie de la mémoire 2.3 est intégré dans le circuit transmetteur 2.5. La figure 5 montre un diagramme bloc du circuit imprimé 2.1 présentant schématiquement les circuits à sécuriser et les circuits qui n'ont pas besoin de l'être. La mémoire 3.1 possède alors un port d'accès direct pour le bus de données, le bus d'adresse et les signaux de contrôle, et un port secondaire pour les entrées et les sorties de signaux vers la partie non sécurisée du circuit imprimé. Dans ce mode de réalisation, le port secondaire est vu par le circuit de contrôle 2.2 comme une partie de la mémoire, comportant un nombre déterminé de mots mémoire, le mot mémoire ayant un certain nombre de bits de données. Par exemple, le port secondaire comporte 8 lignes d'adresse, 8 lignes de données et des signaux de contrôle tel que « R/W » et « VMA », signifiant le sens des données et le fait que la configuration des signaux d'adresse est valide sur le port secondaire. Dans cet exemple, le port secondaire est vu par le circuit de contrôle 2.2 comme une mémoire de 256 octets. Le circuit de communication (2.5) sauvegarde des données et n'autorise pas l'émission de ces données dans la partie sécurisée lorsque le signal électrique de commande (2.6) est activé. De cette façon, lorsque les informations sont sensibles, elles restent dans la mémoire de la partie sécurisée et ne sont pas lisible par les circuits électroniques de la partie non sécurisée.

La figure 6 est un schéma des principaux circuits de la zone sécurisée avec leurs principales liaisons selon l'autre mode de réalisation. La mémoire non volatile comporte une mémoire de type « FLASH BGA » et au moins un circuit transmetteur 74LVCR2245APW. On voit en comparaison avec la figure 3 que le nombre de liaisons a diminué. A cause de l'intégration du circuit transmetteur et de la mémoire en un seul circuit, la taille de la zone sécurisée est réduite.

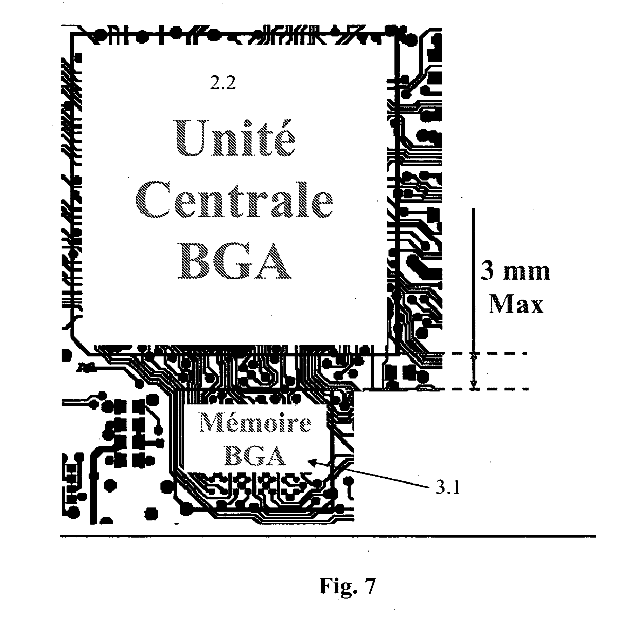

La figure 7 représente un dessin d'implémentation des principaux circuits de la zone sécurisée selon l'autre mode de réalisation décrit par la figure 4. En comparaison de la figure 4, le fait de passer de trois circuits à deux circuits réduit la place occupée par l'environnement sécuritaire sur le circuit imprimé.

Les présents modes de réalisation doivent être considérés à titre d'illustration mais peuvent être modifié dans le domaine défini par la portée des revendications jointes. En particulier, l'invention ne se limite pas aux décodeurs décrits précédemment mais à tout appareil doté de circuits ayant des contraintes de sécurité.

## Revendications

1. Carte électronique (2.1) comportant une zone dite sécurisée comprenant une pluralité de premiers circuits électronique (2.2, 2.3, 2.5), dont un circuit de contrôle (2.2), lesdits premiers circuits étant éloignés les uns des autres d'au plus une distance déterminée, les liaisons électriques reliées aux premiers circuits (2.2, 2.3, 2.5) et transmettant des signaux sécurisés ne s'éloignant pas desdits premiers circuits d'au plus ladite distance déterminée, et une zone non sécurisée comprenant des seconds circuits électroniques (2.4) qui sont éloignés des premiers circuits (2.2, 2.3, 2.5) de plus de la distance déterminée ou dont les liaisons électriques transmettant des signaux sécurisés sont distants de plus de ladite distance déterminée ; **caractérisé en ce que** la zone sécurisée comprend un circuit de communication (2.5) permettant le passage de signaux entre les premiers et seconds circuits, le passage des signaux électriques dans le circuit de communication (2.5) étant conditionné par un signal électrique de commande (2.6) émis par le circuit de contrôle (2.2).

2. Carte électronique selon la revendication 1 ; **caractérisée en ce que** le signal électrique de commande (2.6) conditionnant le passage des signaux électriques dans le circuit de communication (2.5) est fonction du code opératoire de l'instruction en cours d'exécution dans le circuit de contrôle (2.2).

3. Carte électronique selon l'une quelconque des revendications 1 et 2 ; **caractérisée en ce que** le signal électrique de commande (2.6) conditionnant le passage des signaux électriques dans le circuit de communication (2.5) est fonction de l'adresse du code opératoire de l'instruction en cours d'exécution dans le circuit de contrôle (2.2).

4. Carte électronique selon l'une quelconque des revendications 1 à 3 ; **caractérisée en ce que** le signal électrique de commande (2.6) conditionnant le passage des signaux électriques dans le circuit de communication (2.5) est émis par un port de sortie du circuit de contrôle (2.2).

5. Carte électronique selon l'une quelconque des revendications précédentes ; **caractérisée en ce que** le signal électrique de commande (2.6) est relié à un port d'entrée du circuit de contrôle (2.2) de façon à pouvoir lire son état électrique, le circuit de contrôle (2.2) se bloquant si l'état présent sur le port ne correspond pas à l'état logique imposé par le circuit de contrôle (2.2).

6. Carte électronique selon l'une quelconque des revendications précédentes ; **caractérisée en ce que** le circuit de communication (2.5) contient une mémoire permettant au circuit de contrôle (2.2) de sauvegarder des données lorsque le signal électrique de commande (2.6) est activé, bloquant ainsi la sortie des données vers la partie non sécurisée.

7. Méthode de contrôle d'accès à des données au sein d'une carte électronique (2.1) comportant une zone dite sécurisée comprenant une pluralité de premiers circuits électronique dont un circuit de contrôle (2.2), lesdits premiers circuits (2.2, 2.3, 2.5) étant éloignés les uns des autres d'au plus une distance déterminée, les liaisons électriques reliées aux premiers circuits et transmettant des signaux sécurisés ne s'éloignant pas desdits premiers circuits d'au plus ladite distance déterminée, et une zone non sécurisée comprenant des seconds circuits électroniques (2.4) qui sont éloignés des premiers circuits (2.2, 2.3, 2.5) de plus de la distance déterminée ou dont les liaisons électriques transmettant des signaux sécurisés sont distants de plus de ladite distance déterminée ;
**caractérisé en ce que** la zone sécurisée comprend un circuit de communication (2.5) permettant le passage de signaux entre les premiers et seconds circuits, le passage des signaux électriques dans le circuit de communication (2.5) étant conditionné par un signal électrique de commande (2.6) émis par le circuit de contrôle (2.2), le procédé comportant une étape de lecture du signal électrique de commande (2.6) par le circuit de contrôle (2.2) de façon à pouvoir lire son état électrique, et une étape de blocage dudit circuit de contrôle (2.2) si l'état électrique détecté ne correspond pas à l'état imposé par le circuit de contrôle.

8. Méthode de contrôle d'accès à des données selon la revendication 7 ; **caractérisé en ce que** l'état du signal électrique de commande est fonction du code opératoire de l'instruction en cours d'exécution dans le circuit de contrôle (2.2).

9. Méthode de contrôle d'accès à des données selon la revendication 7 ; **caractérisé en ce que** l'état du signal électrique de commande est fonction de l'adresse du code opératoire de l'instruction en cours d'exécution dans le circuit de contrôle (2.2).

10. Méthode de contrôle d'accès à des données selon l'une quelconque des revendications 7 à 9 ; **caractérisé en ce qu'**il comporte une étape de mémorisation dans le circuit de communication (2.5) des données, lorsque le signal électrique de commande (2.6) est activé, bloquant ainsi la sortie des données vers la partie non sécurisée.

## Claims

1. Electronic card (2.1) comprising a protected zone comprising a plurality of first electronic circuits (2.2, 2.3, 2.5), including a control circuit (2.2), said first circuits being distant from each other by at the least a determined distance, the electrical links connected to the first circuits (2.2, 2.3, 2.5) and transmitting the protected signals not becoming distant from said first circuits by at the least said determined distance, and a non-protected zone comprising second electronic circuits (2.4) that are distant from the first circuits (2.2, 2.3, 2.5) by more than the determined distance or whose electrical links transmitting the protected signals are distant by more than said determined distance, **characterized in that** the protected zone comprises a communication circuit (2.5) enabling the passage of signals between the first and second circuits, the passage of the electrical signals in the communication circuit (2.5) being conditioned by an electrical control signal (2.6) sent by the control circuit (2.2).

2. Electronic card according to claim 1, **characterized in that** the electrical control signal (2.6) conditioning the passage of the electrical signals in the communication circuit (2.5) depends on the operating code of the instruction being executed in the control circuit (2.2).

3. Electronic card according to any one of claims 1 and 2, **characterized in that** the electrical control signal (2.6) conditioning the passage of the electrical signals in the communication circuit (2.5) depends on the address of the operating code of the instruction being executed in the control circuit (2.2).

4. Electronic card according to any one of claims 1 à 3, **characterized in that** the electrical control signal (2.6) conditioning the passage of the electrical signals in the communication circuit (2.5) is sent by an output port of the control circuit (2.2).

5. Electronic card according to any one of the aforementioned claims, **characterized in that** the electrical control signal (2.6) is connected to an input port of the control circuit (2.2) in such a manner as to be able to read its electrical status, the control circuit (2.2) becoming blocked if the status present on the port does not correspond to the logical status imposed by the control circuit (2.2).

6. Electronic card according to any one of the aforementioned claims, **characterized in that** the communication circuit (2.5) contains a memory allowing the control circuit (2.2) to back-up the data when the electrical control signal (2.6) is enabled, thus blocking the output of the data to the non-protected part.

7. Access control method to data within an electronic card (2.1) comprising a protected zone comprising a plurality of first electronic circuits including a control circuit (2.2), said first circuits (2.2, 2.3, 2.5) being distant from each other by at the least a determined distance, the electrical links connected to the first circuits and transmitting the protected signals not becoming distant from said first circuits by at the least said determined distance, and a non-protected zone comprising second electronic circuits (2.4) that are distant from the first circuits (2.2, 2.3, 2.5) by more than the determined distance or whose electrical links transmitting the protected signals are distant by more than said determined distance,
**characterized in that** the protected zone comprises a communication circuit (2.5) enabling the passage of signals between the first and second circuits, the passage of the electrical signals in the communication circuit (2.5) being conditioned by an electrical control signal (2.6) sent by the control circuit (2.2), the method comprising a reading step of the electrical control signal (2.6) by the control circuit (2.2) in such a manner as to be able to read its electrical status, and a blocking step of said control circuit (2.2) if the detected electrical status does not correspond to the status imposed by the control circuit.

8. Access control method to data according to claim 7, **characterized in that** the status of the electrical control signal depends on the operating code of the instruction being executed in the control circuit (2.2).

9. Access control method to data according to claim 7, **characterized in that** the status of the electrical control signal depends on the address of the operating code of the instruction being executed in the control circuit (2.2).

10. Access control method to data according to any one of claims 7 to 9, **characterized in that** it comprises a data memorization step in the communication circuit (2.5), when the electrical control signal (2.6) is enabled, thus blocking the output of the data to the non-protected part.

## Patentansprüche

1. Elektronische Platine (2.1) mit einem so genannten gesicherten Bereich mit einer Vielzahl erster elektronischer Schaltkreise (2.2, 2.3, 2.5), darunter einem Kontrollschaltkreis (2.2), wobei die ersten Schaltkreise um maximal einen bestimmten Abstand voneinander entfernt sind, wobei die elektrischen, mit den ersten Schaltkreisen (2.2, 2.3, 2.5) verbundenen und gesicherte Signale übertragenden Leitungen sich von den ersten Schaltkreisen nicht um mehr als um den bestimmten Abstand entfernen, und einem nicht gesicherten Bereich, der zweite elektronische Schaltkreise (2.4) umfasst, die von den ersten Schaltkreisen (2.2, 2.3, 2.5) um mehr als den bestimmten Abstand entfernt sind oder deren gesicherte Signale übertragende elektrische Leitungen um mehr als den bestimmten Abstand beabstandet sind, **dadurch gekennzeichnet, dass** der gesicherte Bereich einen Kommunikationsschaltkreis (2.5) umfasst, der den Übergang von Signalen zwischen den ersten und den zweiten Schaltkreisen ermöglicht, wobei der Übergang der elektrischen Signale in dem Kommunikationsschaltkreis (2.5) durch ein elektrisches Steuersignal (2.6) geregelt ist, das von dem Kontrollschaltkreis (2.2) ausgegeben wird.

2. Elektronische Platine nach Anspruch 1, **dadurch gekennzeichnet, dass** das elektrische Steuersignal (2.6), das den Übergang der elektrischen Signale in dem Kommunikationsschaltkreis (2.5) regelt, von dem Operationscode der in dem Kontrollschaltkreis (2.2) in Ausführung befindlichen Anweisung abhängt.

3. Elektronische Platine nach einem der Ansprüche 1 und 2, **dadurch gekennzeichnet, dass** das elektrische Steuersignal (2.6), das den Übergang der elektrischen Signale in dem Kommunikationsschaltkreis (2.5) regelt, von der Adresse des Operationscodes der in dem Kontrollschaltkreis (2.2) in Ausführung befindlichen Anweisung abhängt.

4. Elektronische Platine nach einem der Ansprüche 1 bis 3, **dadurch gekennzeichnet, dass** das elektrische Steuersignal (2.6), das den Übergang der elektrischen Signale in dem Kommunikationsschaltkreis (2.5) regelt, von einem Ausgangsport des Kontrollschaltkreises (2.2) ausgegeben wird.

5. Elektronische Platine nach einem der vorstehenden Ansprüche, **dadurch gekennzeichnet, dass** das elektrische Steuersignal (2.6) mit einem Eingangsport des Kontrollschaltkreises (2.2) derart verbunden ist, dass sein elektrischer Zustand abgelesen werden kann, wobei der Kontrollschaltkreis (2.2) sich verriegelt, wenn der am Port vorhandene Zustand dem von dem Kontrollschaltkreis (2.2) erforderten logischen Zustand nicht entspricht.

6. Elektronische Platine nach einem der vorstehenden Ansprüche, **dadurch gekennzeichnet, dass** der Kommunikationsschaltkreis (2.5) einen Speicher umfasst, der es dem Kontrollschaltkreis (2.2) ermöglicht, Daten abzuspeichern, wenn das elektrische Steuersignal (2.6) aktiviert ist, durch das die Ausgabe der Daten zu dem nicht gesicherten Bereich somit blockiert wird.

7. Verfahren für die Kontrolle des Datenzugangs innerhalb einer elektronischen Platine (2.1) mit einem so genannten gesicherten Bereich mit einer Vielzahl erster elektronischer Schaltkreise (2.2, 2.3, 2.5), darunter einem Kontrollschaltkreis (2.2), wobei die ersten Schaltkreise um maximal einen bestimmten Abstand voneinander entfernt sind, wobei die elektrischen, mit den ersten Schaltkreisen (2.2, 2.3, 2.5) verbundenen und gesicherte Signale übertragenden Leitungen sich von den ersten Schaltkreisen nicht um mehr als um den bestimmten Abstand entfernen, und einem nicht gesicherten Bereich, der zweite elektronische Schaltkreise (2.4) umfasst, die von den ersten Schaltkreisen (2.2, 2.3, 2.5) um mehr als den bestimmten Abstand entfernt sind oder deren gesicherte Signale übertragende elektrische Leitungen um mehr als den bestimmten Abstand beabstandet sind, **dadurch gekennzeichnet, dass** der gesicherte Bereich einen Kommunikationsschaltkreis (2.5) umfasst, der den Übergang von Signalen zwischen den ersten und den zweiten Schaltkreisen ermöglicht, wobei der Übergang der elektrischen Signale in dem Kommunikationsschaltkreis (2.5) durch ein elektrisches Steuersignal (2.6) geregelt ist, das von dem Kontrollschaltkreis (2.2) ausgegeben wird, wobei das Verfahren einen Schritt des Lesens des elektrischen Steuersignals (2.6) durch den Kontrollschaltkreis (2.2) aufweist, so dass dessen elektrischer Zustand abgelesen werden kann, und einen Schritt der Verriegelung des Kontrollschaltkreises (2.2), wenn der ermittelte elektrische Zustand dem von dem Kontrollschaltkreis erforderten Zustand nicht entspricht.

8. Verfahren für die Kontrolle des Datenzugangs nach Anspruch 7, **dadurch gekennzeichnet, dass** der Zustand des elektrischen Steuersignals von dem Operationscode der in dem Kontrollschaltkreis (2.2) in Ausführung befindlichen Anweisung abhängt.

9. Verfahren für die Kontrolle des Datenzugangs nach Anspruch 7, **dadurch gekennzeichnet, dass** der Zustand des elektrischen Steuersignals von der Adresse des Operationscodes der in dem Kontrollschaltkreis (2.2) in Ausführung befindlichen Anweisung abhängt.

10. Verfahren für die Kontrolle des Datenzugangs nach einem der Ansprüche 7 bis 9, **dadurch gekennzeichnet, dass** es einen Schritt des Speicherns in dem Datenkommunikationsschaltkreis (2.5) umfasst, wenn das elektrische Steuersignal (2.6) aktiviert ist, durch das die Ausgabe der Daten zu dem nicht gesicherten Bereich somit blockiert wird.
